(19)

**Europäisches Patentamt**

**European Patent Office**

**Office européen des brevets**

(11) **EP 4 730 794 A1**

(12) **EUROPEAN PATENT APPLICATION**

(43) Date of publication:
22.04.2026 Bulletin 2026/17

(21) Application number: 24306755.0

(22) Date of filing: 21.10.2024

(51) International Patent Classification (IPC):
H04N 19/13 (2014.01)  H04N 19/136 (2014.01)
H04N 19/172 (2014.01)  H04N 19/176 (2014.01)
H04N 19/46 (2014.01)  H04N 19/91 (2014.01)

(52) Cooperative Patent Classification (CPC):
H04N 19/91; H04N 19/13; H04N 19/136;
H04N 19/172; H04N 19/176; H04N 19/46

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: InterDigital CE Patent Holdings, SAS
75017 Paris (FR)

(72) Inventors:
• SCHNITZLER, Francois
56890 SAINT AVE (FR)
• GALPIN, Franck
35235 THORIGNE-FOUILLARD (FR)

(74) Representative: Vossius & Partner
Patentanwälte Rechtsanwälte mbB
Siebertstraße 3
81675 München (DE)

(54) **HYPERPRIOR FOR LATENT IMPLICIT NEURAL REPRESENTATION**

(57) Disclosed herein are systems, methods, and instrumentalities associated with latent implicit neural representation. According to embodiments of the disclosure, a video decoding device may be configured to determine, using a first neural network, a probability distribution associated with a current latent code. The video decoding device may decode the current latent code from a video bitstream based on the determined probability distribution and may determine, based on the latent code, parameters of a second neural network. The video decoding device may use the second neural network to decode video data.

FIG. 9

EP 4 730 794 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for using a latent implicit neural representation (INR) neural network to encode or decode a video. According to embodiments of the present disclosure, a video decoding device may be configured to determine, using a first neural network, a probability distribution associated with a current latent code. The video decoding device may decode the current latent code from a video bitstream based on the determined probability distribution and may determine, based on the latent code, at least one parameter of a second neural network. The video decoding device may use the second neural network to decode video data. According to embodiments of the present disclosure, a video encoding device may determine, using a first neural network, a probability distribution associated with a latent code. The video encoding device may encode the latent code based on the determined probability distribution, and further encode respective parameters of a second neural network and a third neural network. The second neural network may be configured to reconstruct video data based on pixel information associated with the video data, and the third neural network may be configured to determine an update to the parameters of the third neural network based on the latent code.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows an example of an implicit neural representation (INR) network.
FIG. 5 shows an example video encoding system.
FIG. 6 shows an example video decoding system.
FIG. 7 shows an example of a hybrid INR network.
FIG. 8 shows an example of a latent INR model.
FIG. 9 shows an example of encoding hypernetwork latent codes using a hypernetwork latent probability (HLP) network.
FIG. 10 shows examples of previously encoded hypernetwork latent codes that may be used to encode a current latent code.
FIG. 11 shows an example procedure for encoding hypernetwork latent codes.
FIG. 12 shows an example procedure for decoding hypernetwork latent codes.
FIG. 13 shows an example system for decoding hypernetwork latent codes.

**DETAILED DESCRIPTION**

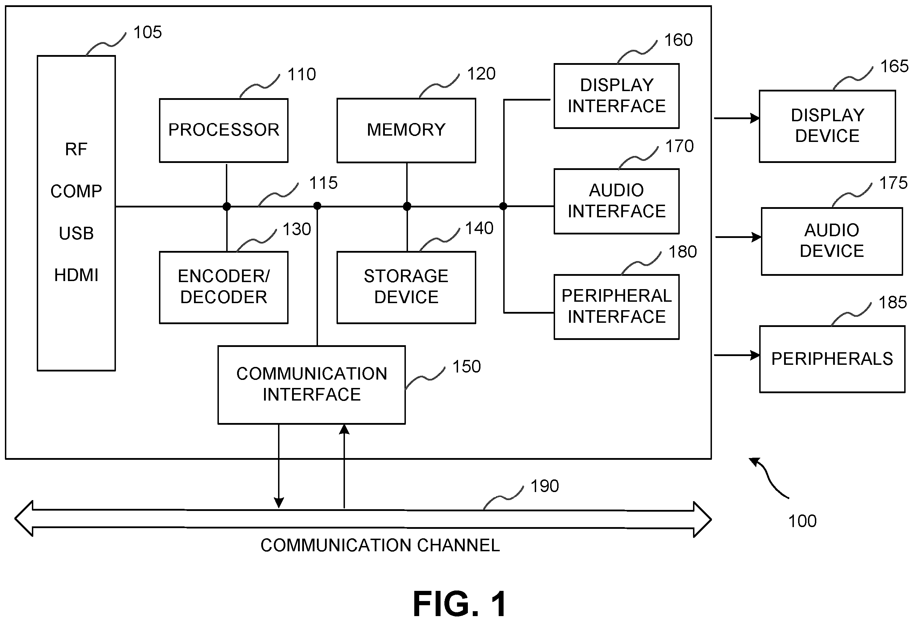

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

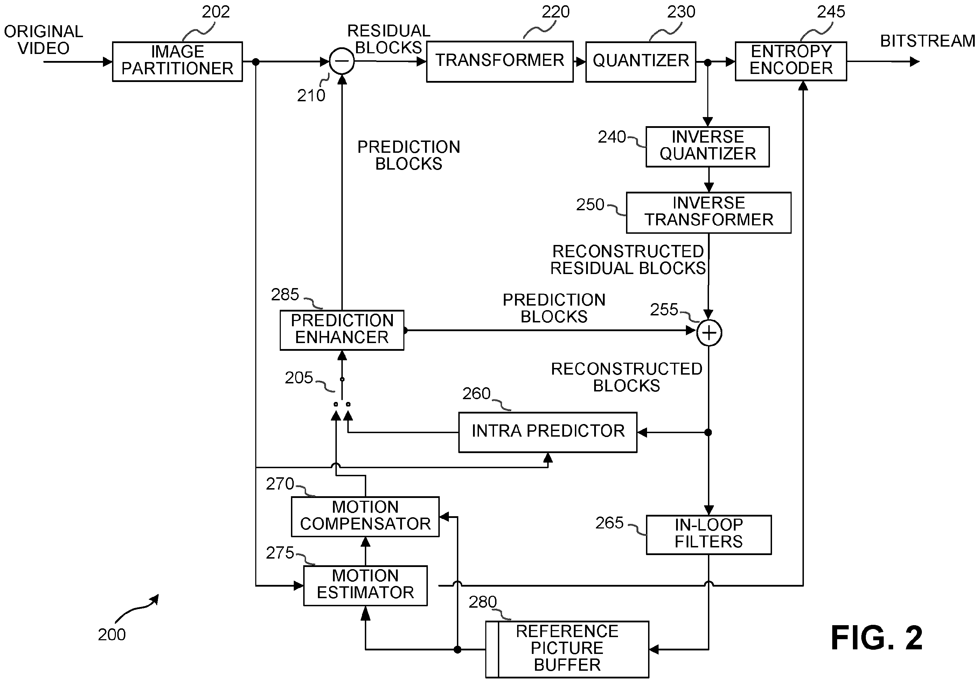

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

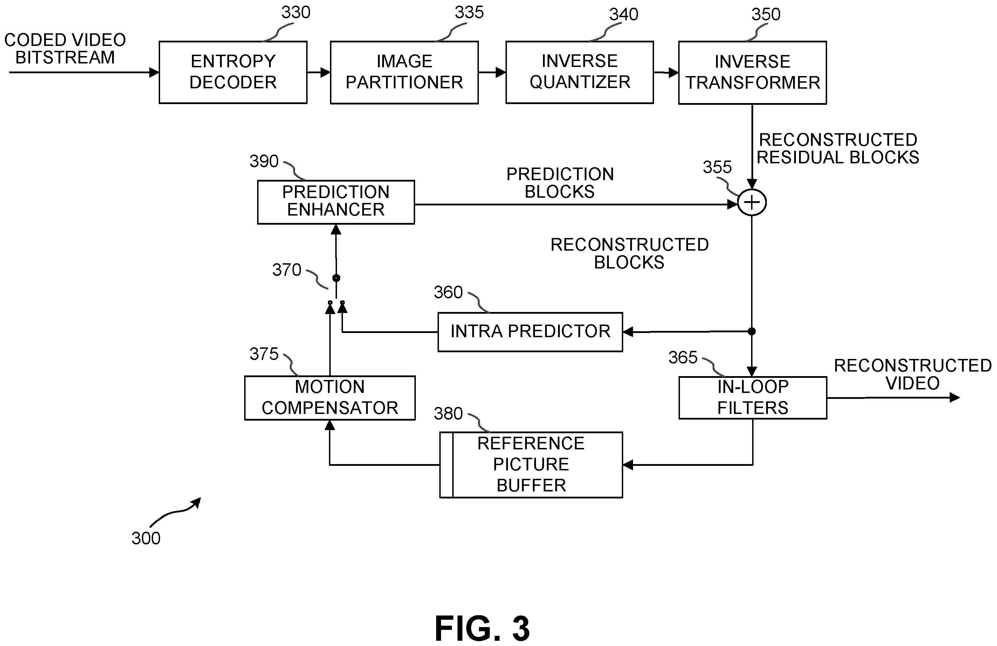

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, $Y$, and chroma components, $U$ and $V$ (also denoted herein by $C$, $Cb$, $Cr$).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are dequantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

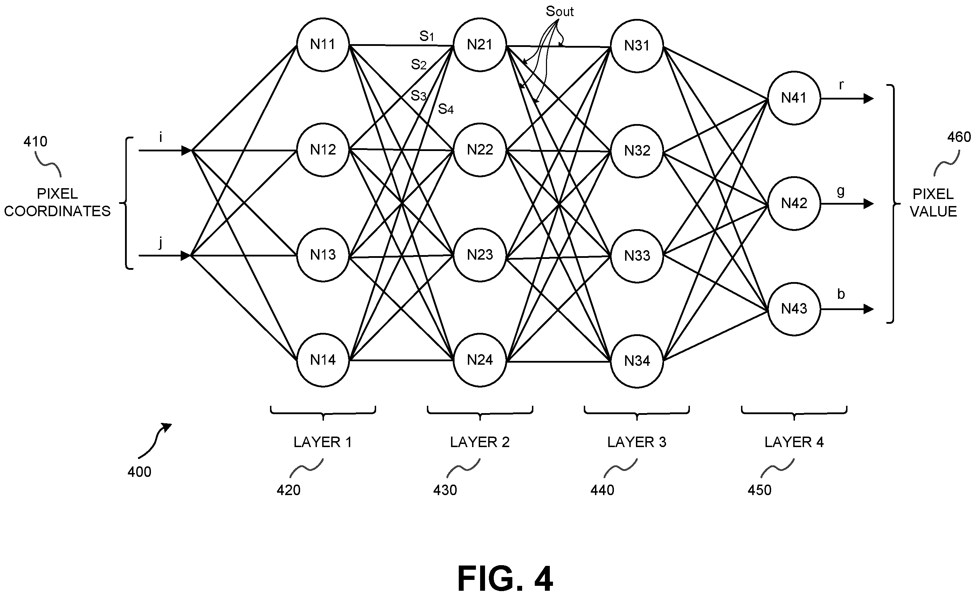

FIG. 4 illustrates an example of an implicit neural representation (INR) network 400. The INR network may be a neural network comprising multiple layers, one or more (e.g., each) of which may include multiple nodes (denoted by circles in FIG. 4). The architecture of the INR network may be characterized by the number of layers, the number of nodes in a layer, and/or the way those nodes are connected. In the example of FIG. 4, the network 400 may include four layers 420, 430, 440, and 450 that may be connected (e.g., fully connected). For example, the first layer 420 may include four nodes N11, N12, N13, and N14, each of which may receive the coordinate values (i, j) 410 of a pixel x, and may output a signal that may, in turn, feed the nodes of the next layer, N21, N22, N23, and N24. The second layer 430 may include four nodes N21, N22, N23, and N24, each of which may receive the output signals of the nodes from the previous layer, N11, N12, N13, and N14, and may output a signal that may, in turn, feed the nodes of the next layer, N31, N32, N33, and N34. The fourth layer 450 may include three nodes N41, N42, and N43, each of which may receive the output signals of the nodes from the previous layer, N31, N32, N33, N34, and output a color component value 460 of the pixel x (e.g., *r, g,* and *b,* or color component values of any other color model, such as *y, u,* and *v*).

A (e.g., each) node in the network 400 may represent an operator that may generate an output signal based on the node's inputs. For example, node N21 of the second layer 430 may receive, as an input, the output signals of nodes N11, N12, N13, and N14 (e.g., $s_1$, $s_2$, $s_3$, and $s_4$, respectively). These inputs may be translate (e.g., mapped) to an output signal $s_{out}$ that may feed the nodes of the third layer 440. A node's operator may be expressed as follows:

$$s_{out} = A(p_0 + \textstyle\sum_{i=1}^{L} p_i \cdot s_i), \qquad (1)$$

where $L$ may denote the number of input signals (e.g., the number of nodes from the previous layer that connects to the node), $s = \{s_i : i = 1\ to\ L\}$ may denote the node's input signal vector, $s_{out}$ may denote the node's output signal, $p = \{p_i ; i = 0\ to\ L\}$ may denote the node's parameter vector (or weight vector), and $A$ may denote an activation function (e.g., ReLU, Sigmoid, or Tanh). The weight vectors (and parameters of the activation functions, if such parameters exist) of respective nodes may be collectively referred to as the parameters $\theta$ of the network 400, which may be determined through a training process. The network operation, denoted by $f_\theta$, may be defined by the network parameters $\theta$.

The INR network 400 may be trained to predict a pixel value of an image, $x(i,j)$, based on the pixel's coordinates $(i,j)$. This may be expressed as $f_\theta(i, j) = (r, g, b)$ (or $f_\theta(i, j) = (y, u, v)$). During a training phase of the INR network 400, the parameters $\theta$ (or a subset of them) may be determined. This may be done, for example, via an optimization process through which the parameters $\theta$ that may minimize a cost function can be determined. For example, the following cost function may be used:

$$Cost = D(\boldsymbol{x}, f_{\boldsymbol{\theta}}) + \lambda R(\theta) \qquad (2)$$

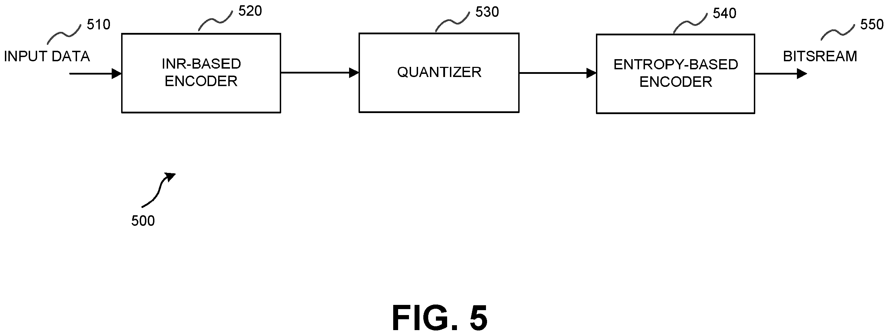

where, $D$ may be a distortion measure of the fidelity of the estimated pixel values, provided by $f_\theta$, relative to the ground truth (e.g., the corresponding pixel values from the original image, denoted by $\boldsymbol{x}$). $R$ may be the resulting bitrate of the encoded parameters $\theta$ (e.g., encoded by quantization and entropy coding as discussed with respect to FIG. 5). A trade-off parameter $\lambda$ may be set to determine the balance between $D$ and $R$. The distortion measure $D$ may be any metric that measures the distance (or similarity) between the original image $x$ and its estimated version provided by $f_\theta$. Such a metric may include, for example, a mean squared error metric or a learned perceptual image patch similarity (LPIPS) metric. For example, a mean squared error metric may be expressed as:

$$D_{MSE} = \frac{1}{WH}\sum_{i\in W, j\in H}(\boldsymbol{x}(i,j) - f_{\boldsymbol{\theta}}(i,j))^2 , \qquad (3)$$

where $W$ and $H$ may be the width and height of the image $\boldsymbol{x}$ that the INR network may be trained to predict. The optimization of the network parameters $\theta$, according to equation (2), may be performed by a machine learning optimization technique such as a batch gradient descent technique. Following the training of the INR network 400 and using the optimal parameters $\theta$ (obtained via the optimization process), the INR network may be applied to predict a pixel value based on its corresponding coordinate values.

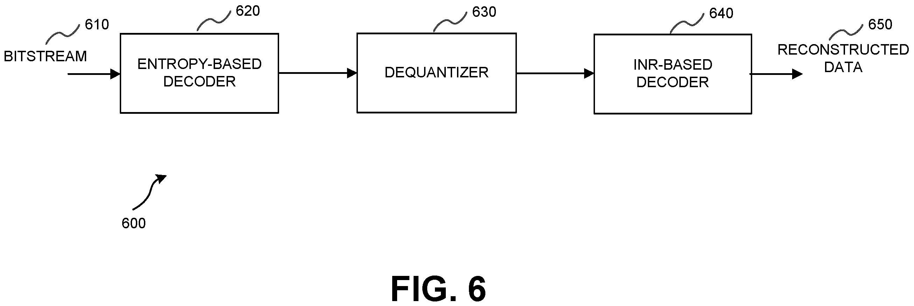

FIGs. 5 and 6 illustrate examples of using an INR network to encode and decode images. FIG. 5 illustrates an example of a video encoding system 500. As shown in FIG. 5, the video encoding system 500 may include an INR-based encoder 520, a quantizer 530, and an entropy-based encoder 540. The INR-based encoder 520 may be configured to receive input data 510 to be coded. The input data 510 may include data associated with a frame of a video (e.g., an image or a picture), a frame or picture of a surface representation of an object, or a frame or picture of volumetric data. To code the input data 510, the INR-based encoder 520 may use (e.g., train) an INR network (e.g., the INR network 400 described herein). Based on the input data 510, the INR-based encoder 520 may optimize a cost function associated with the function $f_\theta$, representative of the INR network, to determine the optimal network parameters $\theta$. For example, for an input image with dimensions $W$ and $H$, $W$ times $H$ pairs of pixel coordinates $(i,j)$ and corresponding pixel values $x(i,j)$ may be used to train the INR network, for example, according to equation (2). The optimal parameters, generated by the INR-based encoder 520, may be quantized by the quantizer 530, and the quantized parameters may be entropy-coded, by the entropy-based encoder 540, into a bitstream 550. The optimal parameters, generated by the INR-based encoder 520, may be coded, for example, using neural compression codecs such as a neural network coding (NNC) codec or an MPEG-7 codec. The bitstream 550 may be used by a decoder to reconstruct the input image 510, for example, as described with reference to FIG. 6.

FIG. 6 illustrates an example of a video decoding system 600. The decoder 600 may be configured to reverse the operation of the encoder 500 of FIG. 5. As shown in FIG. 6, the video decoding system 600 may include an entropy-based decoder 620, a dequantizer 630, and an INR-based decoder 640. The decoding system 600 may receive the bitstream 610 (e.g., generated by the encoder 500 of FIG. 5) and may entropy-decode quantized INR network parameters at 620. The dequantizer 630 may be employed to dequantize the quantized INR network parameters, obtaining a restored version of the INR network parameters that may be provided to the INR-based decoder 640.

The INR-based decoder 640 may use the trained INR network, defined by the restored INR network parameters, to generate reconstructed data 650. For example, to decode an input image (e.g., a current image of a video), the INR-based decoder 640 may use the trained INR network to predict the value of or to evaluate $f_\theta$ using the coordinates of a (e.g., any) pixel of the input image. The decoding system 600 may be used to reconstruct the encoded input image, reconstruct a region of the encoded input image, or progressively reconstruct the encoded input image. For example, at the encoding system 500 of FIG. 5, an INR network may be trained to predict pixel values of an image with dimensions $W = 256$ by $H = 256$ based on the corresponding coordinates of the pixels. At the decoding system 600, pixel values of the image may be predicted by evaluating the trained INR network using the full coordinate set used for the training of the INR network, including all pairs of $i \in 0, 1, ...,255$ and $j \in 0, 1, ...,255$. The pixel values of the image may also be predicted by using a subset of the full coordinate set, including coordinates from a region of the encoded image. The pixel values of the image may also be predicted by using a first subset of the full coordinate set, including coordinates of a subsampled version of the image (e.g., which may form a low-resolution version of the encoded image), and a second subset of the full coordinate set, including the remaining coordinates. Any set of coordinates may be used to predict the corresponding pixel values, for example, in order to interpolate or extrapolate the encoded image.

Hybrid INR networks may be used to represent video data, including images, videos, 3D objects, and/or volumetric data, among other types of data. In an example of a hybrid INR network, coordinates associated with video data may be first mapped into one or more latent variables (or one or more feature vectors). The latent variables may be used as inputs for the hybrid INR neural network.

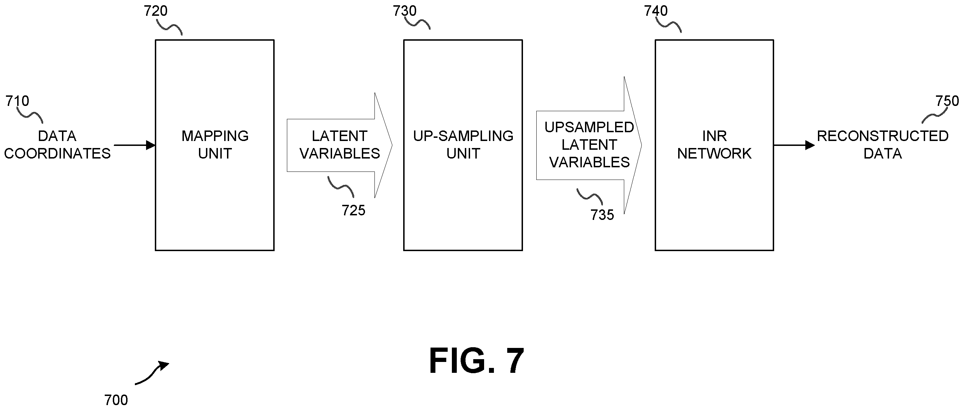

FIG. 7 illustrates an example of a hybrid INR network 700. The hybrid INR network 700 may be used by the INR-based encoder 520 of FIG. 5 and/or the INR-based decoder 640 of FIG. 6. In the example of FIG. 7, during the encoding of input data (e.g., the training of the network 700), coordinates 710 of the input data may be mapped (e.g., by a mapping unit 720) into one or more latent variables 725. The mapping may be implemented using a lookup table or a hash function, for example. The mapping may involve a transformation, such as a Fourier transformation, a coordinate transformation, a normalization transformation, or a combination thereof. The latent variables 725 may be up-sampled (e.g., by an up-sampling unit 730), resulting in up-sampled latent variables 735. The up-sampled latent variables may be provided as an input to an INR network 740 (e.g., such as INR network 400 of FIG. 4) that may be trained to produce reconstructed data 750. The latent variables 725 may be trained together with the parameters $\theta$ of the INR network 740, resulting in optimal network parameters and/or optimal latent variables. Using the system architecture shown in FIG. 7, local attributes of the input data may be better handled. For example, a group of latent variables corresponding to a given part of the input data may be uncorrelated with other groups of latent variables corresponding to other parts of the input data. As such, groups of latent variables may be tailored to (e.g., to better represent) corresponding parts of the input data.

Following the training of the hybrid INR network 700 (e.g., at the encoder 520 of FIG. 5), the learned latent variables 725 and/or the network parameters may be quantized (e.g., by the quantizer 530 of FIG. 5) and coded (e.g., by the entropy-based encoder 540) into a bitstream. During inference, the latent variable 725 and/or the network parameters of the trained INR network 740 may be decoded (e.g., by the entropy-based decoder 620 of FIG. 6) from the bitstream and dequantized (e.g., by the dequantizer 630 of FIG. 6). The decoded and dequantized latent variables may be up-sampled at 730 and fed into the trained INR network 740 to reconstruct data 750, using the decoded and dequantized network parameters of the INR network.

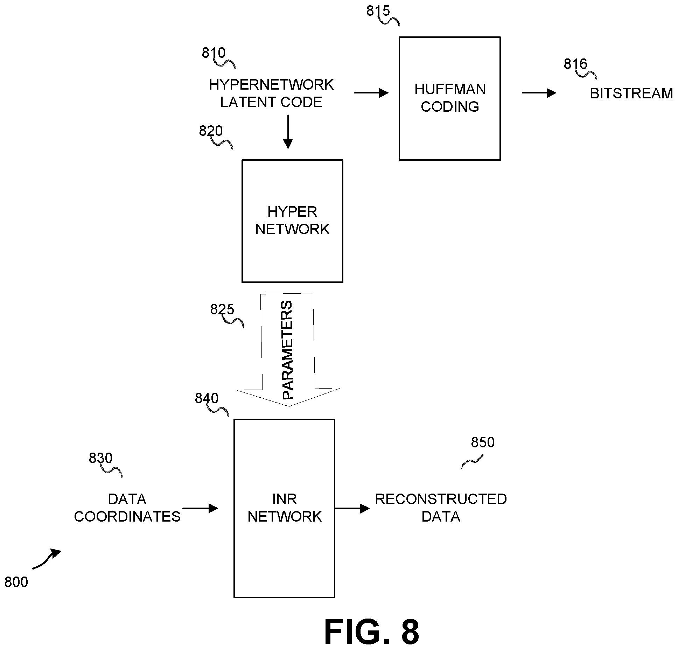

FIG. 8 illustrates an example in which a hypernetwork 820 (e.g., a neural network h) may be configured (e.g., trained) to take, as an input, a hypernetwork latent code z (e.g., 810 of FIG. 8), and may generate parameters (or parameter updates) h(z) (e.g., 825 of FIG. 8) for some (e.g., at least one) or all the parameters of a base INR network 840. The base INR network 840 may be updated with the parameters or parameter updates generated by the hypernetwork 820. Using the updated parameters for a function $f_{\theta + h(z)}$, the based INR network 840 may reconstruct data 850 by processing data coordinates 840 and/or other input data. The hypernetwork 820 may be used for any type of base INR networks or models, including a regular INR model or a hybrid INR model as described herein. The hypernetwork latent codes 810 may be compressed (e.g., coded) using quantization and/or Huffman coding (e.g., at 815 of FIG. 8) techniques to obtain a bitstream 816. A hypernetwork latent code may be generated for a corresponding part of a video signal, such as for each frame of a video.

In the latent INR model shown in FIG. 8, the hypernetwork latent codes 810 may or may not be compressed (e.g., via Huffman encoding), so there may be redundancy in latent codes when encoding multiple parts of a video signal (e.g., such as frames of a video). If the redundancy is not removed or reduced, it may result in long bitstreams.

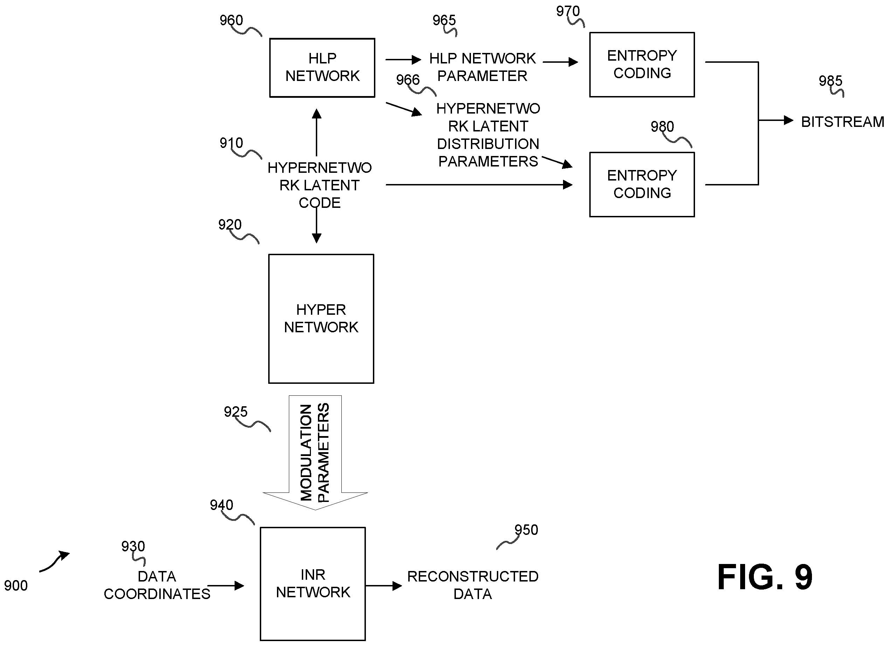

The hypernetwork latent codes $Z = \{z_1, \ldots, z_Q\}$ described herein may be encoded using a hypernetwork latent probability (HLP) network to better exploit the redundancy between those hypernetwork latent codes and achieve a smaller bitrate. FIG. 9 illustrates an example system that may include such an HLP network. As shown in FIG. 9, a neural hypernetwork h (e.g., 920 of FIG. 9) may take, as an input, a hypernetwork latent code z (e.g., 910 of FIG. 9) and generate parameters or parameter updates h(z) (e.g., 925 of FIG. 9) for some (e.g., at least one) or all of the parameters of an INR network 940. The base INR network 940 may be updated with the parameters or parameter updates generated by the hypernetwork 920, after which the based INR network 940 may be used to reconstruct data 950 (e.g., a video or image) based on one or more data inputs (e.g., pixel coordinates 940). The hypernetwork latent codes may be processed by an HLP network $g_\pi$ (e.g., 960 of FIG. 9). This network may take, as input(s), previously encoded hypernetwork latent codes $B_i$ $\subset \{z_1, \ldots, z_{i-1}\}$ and output parameter values $g_\pi(B_i)$ (e.g., 966 of FIG. 9) that may indicate a probability distribution or density $P(z_i | g_\pi(B_i))$ associated with the next hypernetwork latent code to be encoded. These hypernetwork latent distribution parameters and/or the associated distribution may be used by an entropy coder (e.g., 980 of FIG. 9) to encode the next hypernetwork latent code. The HLP network may be used by a decoder, so its parameters (e.g., 965 of FIG. 9) may be encoded and included in a bitstream, for example, by an entropy coder (e.g., 970 of FIG. 9). The encoding of one or more of the parameters described herein may be done using a suitable neural compression codec (e.g., such as a neural network coding (NNC) codec or an MPEG-7 codec) and/or by quantizing the weights of the neural networks and/or pruning some neurons from the networks. In examples, the HLP network parameters may not be learned or a subset of the HLP network parameters may not be learned, in which case the bitstream may not include the non-learned parameters.

Various types of previously encoded hypernetwork latent codes $B_i$ may be provided as an input to the HLP network. For example, the input to the HLP network may include a set of the most recently encoded hypernetwork latent codes that may be sampled at regular or irregular intervals, or a subset of the first encoded hypernetwork latent codes. The input to the HLP network may also include a diverse subset of previously encoded hypernetwork latent codes, where the subset may be optimized to maximize the diversity. The input to the HLP network may include a combination of some or all of the hypernetwork latent codes described herein.

In examples, the hypernetwork latent codes may be arranged in more than one dimension, for example, because they may be associated with parts of a signal of more than one dimension. For instance, a respective hypernetwork latent code may be associated with each coding unit in a frame, or with each subspace in a 3D volume. For dynamic content, a temporal dimension may be present and different hypernetwork latent codes may be used for different time steps or time windows. The previously encoded hypernetwork latent codes used to encode a current latent code may be chosen (e.g., at least partially) based on their neighboring relationships with the current latent code. For example, the hypernetwork latent codes used to encode a current latent code may be the closest to the current latent code (e.g., the coding units associated with the used hypernetwork latent codes may be the closest to the coding unit associated with the current latent code). The hypernetwork latent codes used to encode the current latent code may be defined in terms of their relative positions to the current latent code. For example, the hypernetwork latent codes to the left of the current latent code, the four closest hypernetwork latent codes one and two rows above the current latent code, and/or the hypernetwork latent codes in a previous frame at the same locations as that of the current latent code may be used to encode the current latent code.

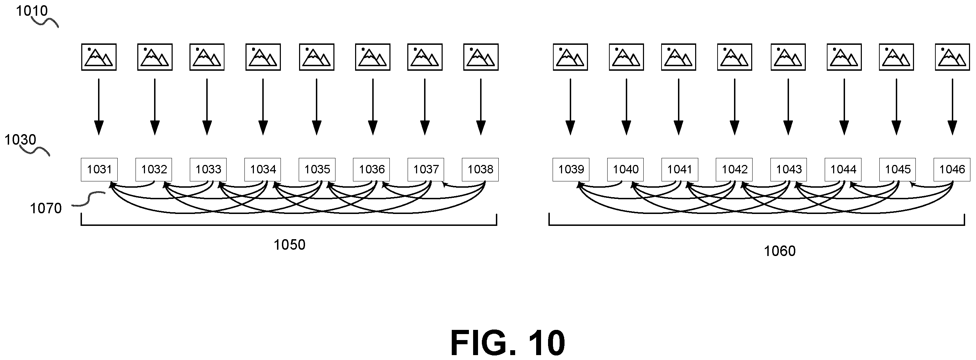

In examples, constraints may be introduced on the choice of previously encoded hyper network latent codes to improve decoding ability. For instance, when encoding a temporal signal divided in temporal blocks, previously encoded hyper network latent codes may be limited to those associated with a current block. In a video, such a block may correspond to a group of pictures (GOP). FIG. 10 illustrate such an example. As shown in FIG. 10, a set of frames 1010 may be divided into two GOPs 1050 and 1060. Each frame may be associated with a respective hypernetwork latent code 1030, so $Z = \{z_{1031}, ..., z_{1046}\}$. The arrows 1070 pointing away from a hypernetwork latent code may indicate previously encoded hypernetwork latent codes that may be used as inputs to the HLP for encoding the hypernetwork latent code at the origin of the arrow (e.g., $B_{1031} = \emptyset$, $B_{1032} = \{z_{1031}\}$, $B_{1033} = \{z_{1031}, z_{1032}\}$, etc.). In the example of FIG. 10, B may be limited to the hypernetwork latent codes of 3 previous frames in the GOP (e.g., $B_{1039} = \emptyset$), even though there may be other frames encoded before them. With the configuration shown in FIG. 10, each GOP may be decoded independently. In examples, a signal may be sent at the beginning of each frame to inform on the dependency between frames. For instance, a current picture or frame may use a reduced set of previously decoded hypernetwork latent codes to increase decoding parallelism between the frames. As another example, hypernetwork latent codes may be encoded in a separated NAL (Network Abstraction layer) unit with an associated ID. A current picture or frame may refer to one or more specific IDs in order to decode the current picture or frame, or emit a new ID and its associated parameters.

In examples, when encoding a frame, previously encoded hyper network latent codes used to encode a current latent code may be limited to hyper network latent codes associated with coding units located in one or more previous rows or in the same row to the left of the coding unit associated with the current latent code. This way, decoding may be done in a wavefront style. The parameters of the base INR model may be updated in various ways using the generated parameters or parameter updates $h(z)$ described herein. For example, the generated parameters or parameter updates $h(z)$ may be used to replace some or all of the parameters of the base INR model (e.g., such as some/all of the biases or parameters in some/all layers of the base INR network). The generated parameters or parameter updates $h(z)$ may modify some or all of the parameters of the base INR model, for example, by adding them, subtracting them, multiplying them and/or dividing them. One or more activation layers of the based INR model may be updated, for example, by applying a scaling coefficient on a leaky RELU weight. A (e.g., each) generated parameter or parameter update may apply to one or multiple parameters of the base INR model. The generated parameters or parameter updates $h(z)$ may be transformed before being used to modify the base INR model. The transform may be performed, for example, by using matrix multiplication or division to generate more or fewer values. Any distance metric may be used to measure proximity associated with the parameter updates, such as, for example, a Euclidian distance, a graph distance, an L1 distance, etc.

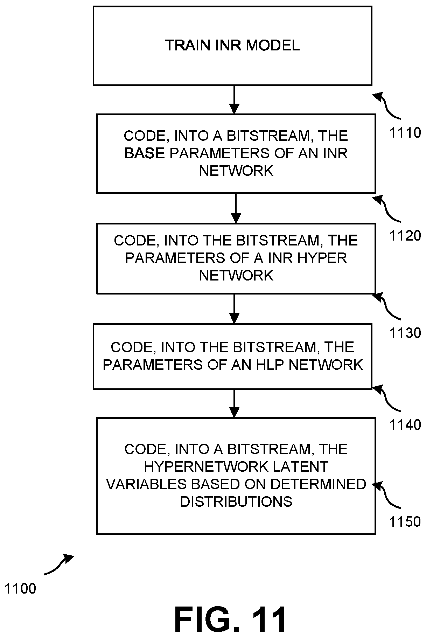

FIG. 11 illustrates operations that may be associated with encoding a signal (e.g., a video or a segment of the video). An INR model 1110 (e.g., including an HLP network as described herein) may be trained, for example, using one or more additional losses to measure the coding length of hypernetwork latent codes. Such losses may be used, for example, to estimate a bitrate using the estimated entropy of the compressed hypernetwork latent codes based on a probability distribution $P(z_i|g_\pi(B_i))$, as illustrated by the formular below:

$$Rate(z_i) = log\, P(z_i|g_\pi(B_i))$$

The losses may include an additional term designed to penalize the rate of transmission of parameters $\pi$, $R(\pi)$. One or more operations used to train a hybrid INR model may also be used to train the INR model 1110. In examples, the full INR model may be trained together including, for example, the parameters $\theta$ of a base INR model, the hypernetwork latent codes Z, the parameters $\pi$ of an HLP network, the parameters of a hypernetwork $h$, and/or other applicable variables (e.g., latent values, an autoregressive model, and/or other model that may be used when using a hybrid INR as the base INR model). In examples, the model 1110 may be trained, in a first step, without the HLP hypernetwork (and thus without the losses described above). Then, the parameters $\pi$ of the HLP hypernetwork may be trained in a second step (e.g., after training the main model) to improve the encoding of $Z$ (e.g., in terms of bitrates, or bitrates and distortion). In examples, the training may be performed in a quantization aware manner. The training may also involve steps to account for the coding of a probability model (e.g., such as quantization, pruning, etc.), for example, by using additional noise and/or adding specific terms to the loss function (e.g., such as the rate of network parameters). As an example of encoding a signal divided into Q parts $X = \{x_1, ..., x_Q\}$ with Q hypernetwork latent codes $Z = \{z_1, ..., z_Q\}$, a loss may be as follows:

$$\sum_{q \in \{1,\dots,Q\}} D\left(\boldsymbol{x_q}, f_{\boldsymbol{\theta_q + h(z_q)}}\right) + \lambda_1 R(\theta) + \lambda_2 \log P(z_q | g_\pi(B_q)) + \lambda_3 R(\pi),$$

where $\theta_q \subset \theta$ may denote the subset of parameters of the base INR model used to generate $x_q$.

At 1120 of FIG. 11, the base INR model parameters $\theta$ may be encoded into a bitstream. This may be done, for example, using a neural compression codec such as an NNC or MPEG-7 codec, or by quantizing the weights of the network and/or pruning some neurons from the network. In examples, additional parameters such as scaling function coefficients or Fourier mapping coefficients may also be encoded.

In examples such as when the base INR model is a hybrid INR model, at least some parameters (e.g., from a probability model and/or an up-sampling model) may be encoded using the technique described above. Latent values may be coded using an entropy coder, for example, based on a discrete probability distribution over quantized latent features provided by a distinct autoregressive model (or other suitable models). This may involve quantization of the latent features if it was not done before.

At 1130 of FIG. 11, the parameters of the hypernetwork may be encoded into a bitstream, for example, similar to the encoding of the INR parameters as described herein.

At 1140, the parameters $\pi$ of the HLP network may be encoded in a bitstream, for example, similar to the encoding of the INR parameters as described herein.

At 1150, hypernetwork latent codes may be encoded using an entropy coder based on a discrete probability distribution over quantized latent features provided by the HLP network. These latent codes may be encoded successively. A (e.g., each) hypernetwork latent code $z_i$ may be encoded by obtaining previously encoded hypernetwork latent codes $B_i$, generating a parameter distribution $g_\pi(B_i)$, and using the obtained/generated information in the entropy coder. This operation may involve quantization of the latent features (e.g., if it was not done before). If parameters $\pi$ have been quantized at 1240, the quantized values may be used to compute $g_\pi(B_i)$.

The training of INR model 1110 may be performed in other manners instead of or in addition to that described with reference to FIG. 11. For example, multiple elements may be optimized at the same time, sequentially or iteratively. The optimization variables may be optimized in part or together using any suitable optimization algorithm such as greedy search, gradient descent of a specific loss, genetic techniques, machine learning techniques, etc. The optimization may be performed based on the encoding of previous signal segments, using initialization from previous results, based on reinforcement learning, and/or using active learning techniques.

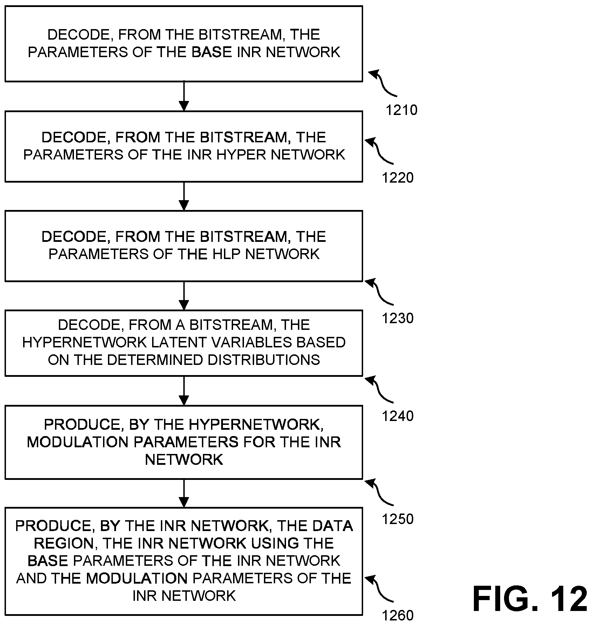

The bitstream resulting from the operations illustrated in FIG. 11 may be decoded by a decoder, for example, as illustrated in FIG. 12. At 1210 of FIG. 12, parameters of a base INR network may be obtained, for example, by decoding the parameters from the bitstream or by reusing the INR network parameters associated with another frame. In examples such as when the base INR model is a hybrid INR model, additional neural network parameters (e.g., those from a probability model and/or an up-sampling model) and/or latent codes or values may be decoded from the bitstream (e.g., the decoding may involve dequantization).

At 1220 of FIG. 12, parameters of a hypernetwork may be obtained, for example, by decoding them from the bitstream or by reusing the hypernetwork parameters associated with another frame (e.g., the decoding may involve dequantization).

At 1230 of FIG. 12, parameters $\pi$ of an HLP network may be obtained, for example, by decoding them from the bitstream or by reusing the hypernetwork parameters associated with another frame (e.g., the decoding may involve dequantization).

At 1240 of FIG. 12, hypernetwork latent codes may be decoded progressively. This may be done, for example, sequentially or in a wavefront manner, and the decoding may also involve dequantization. For each hypernetwork latent code $z_i$, a set of previously decoded hypernetwork latent codes $B_i$ may be obtained, and a parameter distribution $g_\pi(B_i)$ may be computed (e.g., using the HLP network and based on the previously decoded hypernetwork latent codes $B_i$) and used by the entropy decoder to decode the hypernetwork latent code $z_i$ (e.g., a current hypernetwork latent code) from the bitstream.

At 1250 of FIG. 12, the decoded hypernetwork latent code $z_i$ may be provided as an input to the hypernetwork h to obtain parameters (e.g., original parameters) or parameter updates $h(z_i)$ for the INR network or base model.

The INR network or base model may be modified based on the parameters or parameter updates $h(z_i)$, and used to reconstruct an input signal (e.g., video data) by performing inference on appropriate data (e.g., pixel coordinates) associated with the input signal. For a 2D image or a video, the output of the base INR network may include pixel colors. For a 3D scene, the output of the base INR network may include the color and/or density of a voxel. For a 3D surface (e.g., a hologram), the output of the base INR network may include a signed or unsigned distance to the surface.

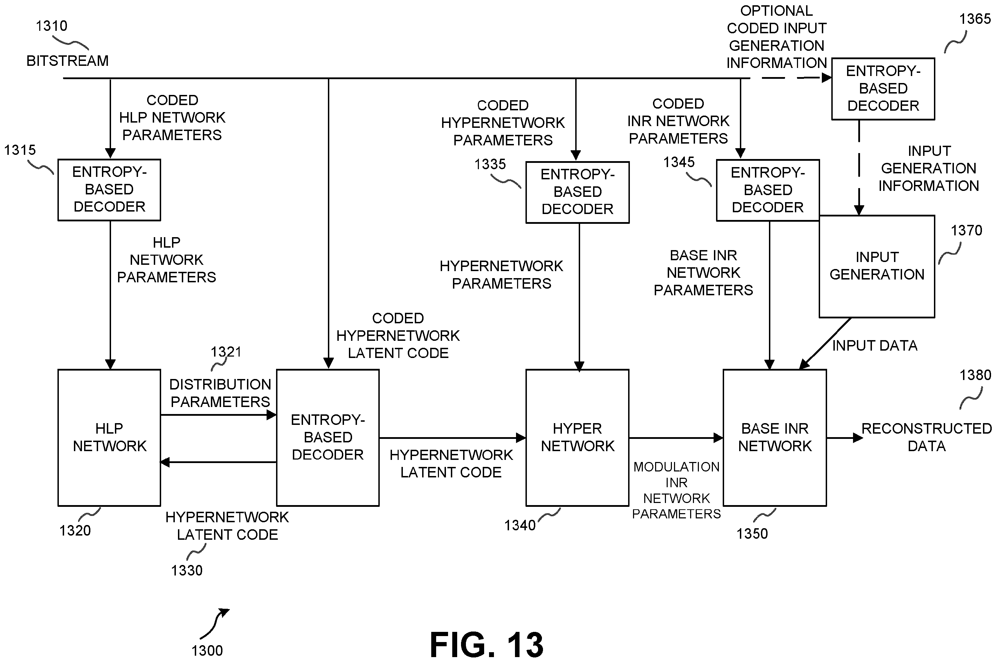

FIG. 13 illustrates the encoding and decoding operations or procedures described herein. As shown in FIG. 13, a decoding system 1300 may include an HLP network 1320, a hypernetwork 1340, a base INR network 1350, and one or more entropy-based decoders 1315, 1330, 1335 and/or 1345. The HLP network 1320 may produce respective distribution parameters associated with one or more hypernetwork latent codes. The HLP network 1320 may operate based on learned HLP network parameters $\pi$, which may be determined during the training of the HLP network 1320. The entropy-based decoder 1315 may decode the HLP network parameters from a bitstream 1310. Based on the distribution parameters 1321, the entropy-based decoder 1330 may decode a hypernetwork latent code from the bitstream 1310. The decoded hypernetwork latent codes may be provided back to the HLP network 1320 to compute the distribution parameters of a current hypernetwork latent code. The decoded hypernetwork latent code may then be used by the hypernetwork 1340 to compute parameters (e.g., original parameters) or parameter updates that may be used to replace or modify some or all the parameters of the base INR network 1350. Further, input data (e.g. signal coordinates) may be generated at 1370 and fed to the modified base INR network 1350 to reconstruct original data 1360 (e.g., a reconstructed image or picture of a video) based on the INR network parameters (e.g., the original parameters of the INR network may be decoded from the bitstream 1310 by the entropy-based decoder 1345, and updated based on the output of hypernetwork 1340). In examples such as a hybrid INR model, the decoding system 1300 may use an additional entropy decoder 1365 to decode from the bitstream 1310 information that may be used to generate the input. Such information may include, for example, frequency mapping coefficients, scale of a Fourier mapping, and/or latent features of the hybrid INR model.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

    i. Encoding, into coded video data, syntax elements that can enable the decoder to decode the coded video data, according to any of the embodiments described herein.

    ii. Video data (e.g., a bitstream) that may include one or more of the described syntax elements, or variations thereof, whether transmitted, stored, or otherwise made available.

    iii. Creating, transmitting, receiving, and/or decoding of the bitstream.

    iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A video decoding device, comprising:
   a processor configured to:

   determine, using a first neural network, a probability distribution associated with a current latent code;
   decode the current latent code from a video bitstream based on the determined probability distribution;
   determine, based on the latent code, at least one parameter of a second neural network; and
   decode video data using the second neural network.

2. The video decoding device of claim 1, wherein the processor is further configured to decode, from the video bitstream, parameters of the first neural network.

3. The video decoding device of claim 1 or claim 2, wherein the processor is further configured to decode, from the video bitstream, parameters of a third neural network, and determine the at least one parameter of the second neural network by providing the current latent code to the third neural network.

4. The video decoding device of claim 3, wherein the third neural network is configured to determine, based on the current latent code, the at least one parameter of the second neural network or an update to the at least one parameter of the second neural network.

5. The video decoding device of any of claims 1-4, wherein the first neural network is configured to determine the probability distribution associated with the current latent code based on one or more previously decoded latent codes.

6. The video decoding device of claim 5, wherein the current latent code is associated with a current picture of a group of pictures (GOP) of the video data, and wherein the one or more previously decoded latent codes are respectively associated with other pictures of the GOP.

7. The video decoding device of claim 5, wherein the current latent code is associated with a current coding unit (CU) of the video data, and wherein the one or more previously decoded latent codes are respectively associated with CUs that are above or to the left of the current CU.

8. The video decoding device of any of claims 1-7, wherein the second neural network is configured to decode the video data based on a plurality of pixel coordinates associated with the video data.

9. A video decoding method, comprising:

   determining, using a first neural network, a probability distribution associated with a current latent code;
   decoding the current latent code from a video bitstream based on the determined probability distribution;
   determining, based on the latent code, at least one parameter of a second neural network; and
   decoding video data using the second neural network.

10. The video decoding method of claim 9, further comprising decoding, from the video bitstream, parameters of the first neural network.

11. The video decoding method of claim 9 or claim 10, further comprising decoding, from the video bitstream, parameters of a third neural network, and determining the at least parameter of the second neural network by providing the current latent code to the third neural network.

12. The video decoding method of claim 11, wherein the third neural network is configured to determine, based on the current latent code, the at least parameter of the second neural network or an update to the at least one parameter of the second neural network.

13. The video decoding method of any of claim 9-12, wherein the first neural network is configured to determine the probability distribution associated with the current latent code based on one or more previously decoded latent codes.

14. The video decoding method of claim 13, wherein the current latent code is associated with a current picture of a group of pictures (GOP) of the video data, and wherein the one or more previously decoded latent codes are respectively associated with other pictures of the GOP.

15. A video encoding device, comprising:
    a processor configured to:

    determine, using a first neural network, a probability distribution associated with a latent code;
    encode the latent code based on the determined probability distribution;
    encode respective parameters of a second neural network and a third neural network, wherein the second neural network is configured to reconstruct video data based on pixel information associated with the video data, and wherein the third neural network is configured to determine an update to the parameters of the third neural network based on the latent code.

**FIG. 1**

**FIG. 2**

EP 4 730 794 A1

**FIG. 3**

EP 4 730 794 A1

**FIG. 4**

EP 4 730 794 A1

INPUT DATA → [INR-BASED ENCODER] 520 → [QUANTIZER] 530 → [ENTROPY-BASED ENCODER] 540 → BITSREAM 550

510 · 500

## FIG. 5

EP 4 730 794 A1

BITSTREAM 610 → ENTROPY-BASED DECODER 620 → DEQUANTIZER 630 → INR-BASED DECODER 640 → RECONSTRUCTED DATA 650

600

**FIG. 6**

**FIG. 7**

**FIG. 8**

FIG. 9

EP 4 730 794 A1

**FIG. 10**

```
┌─────────────────────────────────┐
│                                 │
│        TRAIN INR MODEL          │
│                                 │
└─────────────────────────────────┘
                │
                │                    1110
                ▼
┌─────────────────────────────────┐
│    CODE, INTO A BITSTREAM, THE   │
│   BASE PARAMETERS OF AN INR      │
│            NETWORK               │
└─────────────────────────────────┘
                │
                │                    1120
                ▼
┌─────────────────────────────────┐
│  CODE, INTO THE BITSTREAM, THE   │
│   PARAMETERS OF A INR HYPER      │
│            NETWORK               │
└─────────────────────────────────┘
                │
                │                    1130
                ▼
┌─────────────────────────────────┐
│  CODE, INTO THE BITSTREAM, THE   │
│  PARAMETERS OF AN HLP NETWORK    │
│                                 │
└─────────────────────────────────┘
                │
                │                    1140
                ▼
┌─────────────────────────────────┐
│   CODE, INTO A BITSTREAM, THE    │
│       HYPERNETWORK LATENT        │
│  VARIABLES BASED ON DETERMINED   │
│         DISTRIBUTIONS            │
└─────────────────────────────────┘
                                     1150
```

1100

# FIG. 11

DECODE, FROM THE BITSTREAM, THE PARAMETERS OF THE **BASE** INR NETWORK

1210

DECODE, FROM THE BITSTREAM, THE PARAMETERS OF THE INR HYPER NETWORK

1220

DECODE, FROM THE BITSTREAM, THE PARAMETERS OF THE HLP NETWORK

1230

DECODE, FROM A BITSTREAM, THE HYPERNETWORK LATENT VARIABLES BASED ON THE DETERMINED DISTRIBUTIONS

1240

PRODUCE, BY THE HYPERNETWORK, MODULATION PARAMETERS FOR THE INR NETWORK

1250

PRODUCE, BY THE INR NETWORK, THE DATA REGION, THE INR NETWORK USING THE **BASE** PARAMETERS OF THE INR NETWORK AND THE **MODULATION** PARAMETERS OF THE INR NETWORK

1260

# FIG. 12

**FIG. 13**

Europäisches Patentamt

European Patent Office

Office européen des brevets

# EUROPEAN SEARCH REPORT

**Application Number**

EP 24 30 6755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "IEEE Approved Draft Standard for Neural Network-Based Image Coding ; IEEE P1857.11/D3, June 2024", IEEE STANDARD, IEEE, PISCATAWAY, NJ USA , 27 June 2024 (2024-06-27), pages 1-152, XP068322787, ISBN: 979-8-8557-0953-7 Retrieved from the Internet: URL:https://ieeexplore.ieee.org/document/10576642 [retrieved on 2024-10-03] * section 7.3.2.4.1, page 82 * * section 8.3.3, page 126 * ----- | 1,9,15 | INV. H04N19/13 H04N19/136 H04N19/172 H04N19/176 H04N19/46 H04N19/91 |
| X | US 2022/103839 A1 (VAN ROZENDAAL TIES JEHAN [NL] ET AL) 31 March 2022 (2022-03-31) * paragraph [0103] - paragraph [0104] * * paragraph [0201] - paragraph [0222] * ----- | 1-15 | |
| A | US 2023/096567 A1 (NALCI ALICAN [US] ET AL) 30 March 2023 (2023-03-30) * paragraph [0085] - paragraph [0086] * * paragraph [0100] - paragraph [0114] * ----- | 1-15 | TECHNICAL FIELDS SEARCHED (IPC) H04N |

The present search report has been drawn up for all claims

| Place of search | Date of completion of the search | Examiner |
|---|---|---|
| Munich | 17 March 2025 | Regidor Arenales, R |

EPO FORM 1503 03.82 (P04C01)

## ANNEX TO THE EUROPEAN SEARCH REPORT
## ON EUROPEAN PATENT APPLICATION NO.

EP 24 30 6755

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2025

| Patent document cited in search report | | Publication date | Patent family member(s) | | Publication date |
|---|---|---|---|---|---|
| US 2022103839 | A1 | 31-03-2022 | CN | 116250236 A | 09-06-2023 |
| | | | EP | 4218238 A1 | 02-08-2023 |
| | | | KR | 20230074137 A | 26-05-2023 |
| | | | US | 2022103839 A1 | 31-03-2022 |
| | | | US | 2024205427 A1 | 20-06-2024 |
| | | | WO | 2022066368 A1 | 31-03-2022 |
| US 2023096567 | A1 | 30-03-2023 | CN | 118020297 A | 10-05-2024 |
| | | | DE | 112022004563 T5 | 18-07-2024 |
| | | | US | 2023096567 A1 | 30-03-2023 |
| | | | WO | 2023049374 A1 | 30-03-2023 |

EPO FORM P0459

For more details about this annex : see Official Journal of the European Patent Office, No. 12/82